# EUROPÄISCHE PATENTSCHRIFT

(11) **EP 2 142 281 B1**
(45) Veröffentlichungstag und Bekanntmachung des Hinweises auf die Patenterteilung: **20.06.2012**
(21) Anmeldenummer: 07847178.6
(22) Anmeldetag: 15.11.2007
(51) Int. Cl.: B01D 46/06, B01D 46/08, B65D 90/34

(54) **FLÜSSIGKEITSABSCHEIDER UND TANKSYSTEM MIT EINEM FLÜSSIGKEITSABSCHEIDER**
LIQUID SEPARATOR AND TANK SYSTEM HAVING A LIQUID SEPARATOR
DISPOSITIF DE SÉPARATION DE LIQUIDE ET SYSTÈME DE RÉSERVOIR ÉQUIPÉ D'UN DISPOSITIF DE SÉPARATION DE LIQUIDE

(30) Priorität: 06.02.2007 DE 102007000076
(43) Veröffentlichungstag der Anmeldung: 13.01.2010
(73) Patentinhaber: Deutsche Transalpine Oelleitung Gmbh, 85092 Kösching (DE)
(72) Erfinder: NERB, Josef, 85092 Kösching (DE)
(74) Vertreter: TBK
(86) Internationale Anmeldenummer: PCT/EP2007/062404
(87) Internationale Veröffentlichungsnummer: WO 2008/095556

(56) Entgegenhaltungen:
- WO-A-02/32546
- WO-A-94/08502
- DE-A1- 19 510 821
- US-A- 443 328
- US-A- 1 773 073
- US-A- 4 175 937
- US-A- 4 933 047
- US-A- 5 019 141

## Beschreibung

Die vorliegende Erfindung betrifft einen Flüssigkeitsabscheider zur Abscheidung einer Flüssigkeit aus einer Gasströmung und ein Tanksystem mit einem solchen Flüssigkeitsabscheider.

Bei der Lagerung von Flüssigkeiten ergibt sich das Problem, dass austretende gasförmige Stoffe die Flüssigkeit mitreißen kann, so dass neben der Verschmutzung der zugehörigen Vorrichtung auch Gefahrenquellen entstehen können. Beispielsweise bei der Lagerung von Öl in großvolumigen Tanks besteht die Gefahr, dass Öl aufgrund von aufsteigenden Luft- oder Gasblasen mitgerissen wird. Diese Problematik wird besonders relevant für Tanks, bei denen zwei Voraussetzungen erfüllt sind:
- Der Tank hat eine größere Bauhöhe und eingeleitete Flüssigkeit wird im unteren Bereich des Tanks zugeführt. Dadurch ergibt sich durch den Druckabfall beim Aufsteigen der Flüssigkeit eine mehr oder weniger starke Entgasung des Öls. Außerdem können sich große Gasblasen bilden, die mit großer Geschwindigkeit in die Entlüftung eintreten.
- Die Decke des Tanks ist sehr nah an der Oberfläche des gelagerten Öls angeordnet. Insbesondere bei Schwimmdachtanks mit auf der Öloberfläche liegenden Decken ergibt sich das Problem, dass die aufsteigenden Gasblasen das Öl in die Entlüftungsöffnungen mitreißen.

Bisher werden komplizierte Flüssigkeitsabscheidersysteme in der Prozess- und Verfahrenstechnik eingesetzt. Diese Systeme sind oft entweder mit beweglichen Elementen oder komplizierten Ventilen versehen.

Bei solchen Systemen mit Ventilen oder beweglichen Elementen ergibt sich die Gefahr der Verschmutzung und der Verstopfung insbesondere durch zähe Flüssigkeiten. Die Entlüftungsfunktion kann dann nicht mehr gewährleistet werden.

Im Stand der Technik nach US 4 933 047 A ist ein Flüssigkeitsabscheider vorgeschlagen, bei welchem eine Prallplatte im Strömungsverlauf einer Gasströmung vorgesehen ist, aus der Tropfen abzuscheiden sind.

Weitere Flüssigkeitsabscheider nach dem Stand der Technik sind in den Dokumenten US 4 175 937 A sowie US 5 019 141 A offenbart.

Es ist die Aufgabe der vorliegenden Erfindung, einen Flüssigkeitsabscheider zur Verfügung zu stellen, der mit einfachsten Mitteln herstellbar ist und ohne größeren Wartungsaufwand funktioniert. Ferner ist es das Ziel der vorliegenden Erfindung, einen Flüssigkeitsabscheider zur Verfügung zu stellen, der an bestehenden Anlagen auf einfache Weise ergänzt werden kann.

Die Aufgabe wird durch einen Flüssigkeitsabscheider zur Abscheidung einer Flüssigkeit aus einer Gasströmung mit der Kombination der Merkmale von Anspruch 1 gelöst. Weitere vorteilhafte Ausgestaltungen der Erfindungen sind in den abhängigen Patentansprüchen definiert.

Erfindungsgemäß ist ein Flüssigkeitsabscheider zur Abscheidung einer Flüssigkeit aus einer Gasströmung vorgesehen, der ein Gehäuse hat, das eine Eintrittsöffnung an einem unteren Gehäuseabschnitt und eine Austrittsöffnung an einem oberen Gehäuseabschnitt hat. In dem Gehäuse ist zwischen der Eintrittsöffnung und der Austrittsöffnung eine Prallplatte vorgesehen, die verhindert, dass in der Gasströmung enthaltene Flüssigkeit aus der Austrittsöffnung austritt.

Mit der erfindungsgemäßen Konstruktion des Flüssigkeitsabscheiders kann eine ausreichende Entlüftung zur Verfügung gestellt werden und gleichzeitig verhindert werden, dass die in der Gasströmung enthaltene Flüssigkeit austritt. Die Prallplatte und die spezielle Konstruktion des Flüssigkeitsabscheiders bewirkt, dass die in der Gasströmung enthaltene Flüssigkeit an dieser abgeschieden und zurück zu der Eintrittsöffnung geführt wird.

Gemäß der Erfindung sind das Gehäuse und die Prallplatte rotationssymmetrisch ausgestaltet und ist die Symmetrieachse im Betrieb des Flüssigkeitsabscheiders im Wesentlichen senkrecht ausgerichtet. Hierdurch wird die Konstruktion des Flüssigkeitsabscheiders vereinfacht und kann ebenso die Montage der einzelnen Bauteile fehlerfrei durchgeführt werden.

Gemäß einer weiteren vorteilhaften Ausgestaltung der Erfindung ist das Gehäuse aus dem oberen Gehäuseabschnitt und dem unteren Gehäuseabschnitt ausgebildet. Das Gehäuse besteht aus zwei Gehäusehälften, die miteinander verbunden werden. Daher kann im Fall einer Verstopfung oder einer Beschädigung der Flüssigkeitsabscheider mit einfachen Mitteln geöffnet und gewartet werden.

Gemäß der vorliegenden Erfindung bestehen die Gehäuseabschnitte jeweils aus konusförmigen Elementen. Konusförmige Elemente ermöglichen eine Weitung des Querschnitts zur Aufnahme der Prallplatte. Durch den geweiteten Querschnitt wird ferner der Strömungswiderstand der Gasströmung vermindert.

Gemäß der Erfindung weisen die Gehäuseabschnitte einen Abschnitt mit großem Durchmesser und einen Abschnitt mit kleinem Durchmesser auf, wobei das Gehäuse durch Verbinden der Abschnitte mit großem Durchmesser des oberen Gehäuseabschnitts und des unteren Gehäuseabschnitts gebildet wird. Durch die Verbindung der konischen Elemente wird eine sichere Rückführung der abgeschiedenen Flüssigkeit zu der Eintrittsöffnung gewährleistet. Die Verbindung kann durch Schrauben oder andere Verbindungsmittel erfolgen. Vorzugsweise sollte die Verbindung lösbar sein.

Gemäß der Erfindung hat die Prallplatte die Form eines Konus, der zur äußeren Durchmesserrichtung in Betriebsposition des Flüssigkeitsabscheiders nach unten abfällt. Damit wird ermöglicht, die abgeschiedene Flüssigkeit zu der Eintrittsöffnung zurückzuführen. Ferner kann aufgrund der sich ergebenden Geometrie die Abscheideffizienz an der Prallplatte erhöht werden und wird gleichzeitig der Herstellungsaufwand verringert.

Gemäß einer weiteren vorteilhaften Ausgestaltung der Erfindung bestehen die Prallplatte und/oder die Gehäuseabschnitte aus einem dünnwandigen Material. Insbesondere bestehen in vorteilhafter Weise die Prallplatte und/oder die Gehäuseabschnitte aus Blech. Die Herstellung von Elementen aus dünnwandigem Material oder Blech ist standardisiert und kostengünstig.

Gemäß einer weiteren vorteilhaften Ausgestaltung der Erfindung weist die Prallplatte einen Abtropfansatz auf. Vorzugsweise ist der Abtropfansatz am unteren Ende der Prallplatte vorgesehen. Mit Hilfe des Abtropfansatzes wird ein definiertes Abtropfen der abgeschiedenen Flüssigkeit ermöglicht. Somit kann die Abscheideffizienz des Flüssigkeitsabscheiders erhöht werden.

Gemäß einer weiteren vorteilhaften Ausgestaltung der Erfindung ist der Abtropfansatz kreisförmig am Rand der Prallplatte ausgebildet und im Wesentlichen nach unten ausgerichtet. Diese Ausgestaltung des Abtropfansatzes ermöglicht eine maximale Fläche bzw. Umfangslänge, an der ein definiertes Abtropfen ermöglicht wird. Ferner bildet der Rand der Prallplatte gleichzeitig den niedrigsten Bereich. Damit kann die Abscheideffizienz des Flüssigkeitsabscheiders verbessert werden.

Gemäß einer weiteren vorteilhaften Ausgestaltung der Erfindung ist die Prallplatte an dem oberen und/oder dem unteren Gehäuseabschnitt befestigt. Die definierte Ausrichtung der Prallplatte zu den Gehäuseabschnitten wird somit sichergestellt. Ferner ist die Konstruktion des Flüssigkeitsabscheiders mit einfachen Mitteln möglich.

Gemäß einer weiteren vorteilhaften Ausgestaltung der Erfindung ist die Prallplatte am Gehäuse so befestigt, dass sie von der Innenwand des Gehäuses beabstandet ist. Insbesondere ergibt sich zwischen der Innenwand des Gehäuses und dem Umfang der Prallplatte ein ringförmiger Spalt, durch den im Betrieb des Flüssigkeitsabscheiders die Gasströmung treten kann. Durch diese Ausgestaltung wird ein geringer Strömungswiderstand bei gleichzeitig hoher Abscheideffizienz ermöglicht.

Gemäß einer weiteren vorteilhaften Ausgestaltung der Erfindung teilt die Prallplatte den Innenraum des Gehäuses in ein oberes Volumen oberhalb der Prallplatte und ein unteres Volumen unterhalb der Prallplatte auf, wobei das Verhältnis des oberen Volumens zum unteren Volumen ungefähr 1:3 beträgt. Diese Aufteilung ermöglicht definierte Strömungsgeschwindigkeiten der Gasströmung, so dass die in der Gasströmung enthaltene Flüssigkeit sicher an der Prallplatte abgeschieden werden kann, wobei gleichzeitig der Strömungswiderstand ausreichend gering gehalten wird.

Gemäß einer weiteren vorteilhaften Ausgestaltung der Erfindung ist am unteren Ende des Gehäuses ein Flansch vorgesehen und ist am oberen Ende des Gehäuses ein weiterer Flansch vorgesehen. Erfindungsgemäß sind die Anschlussmaße der Flansche identisch. Dadurch wird ermöglicht, den Flüssigkeitsabscheider in ein bestehendes Rohrsystem einzusetzen, ohne dass Anpassungen am Rohrdurchmesser des vorhandenen Rohrsystems vorgenommen werden müssen. Vielmehr kann durch Auftrennen einer Rohrverbindung und Einsetzen des Flüssigkeitsabscheiders das bestehende System ergänzt werden.

Erfindungsgemäß ist der Flüssigkeitsabscheider konfiguriert, um eine Flüssigkeit enthaltende von der Eintrittsöffnung zur Austrittsöffnung verlaufende Gasströmung von der Flüssigkeit zu befreien, indem die Flüssigkeit an der Prallplatte abgeschieden und über den Abtropfansatz zurück zur Eintrittsöffnung geführt wird.

Gemäß einer weiteren vorteilhaften Ausgestaltung der Erfindung beträgt das Verhältnis einer Durchgangsfläche zwischen der Prallplatte und der Innenwand des Gehäuses und einer Durchgangsfläche an der Eintrittsöffnung mindestens 3:1. Diese Durchgangsfläche ist dabei diejenige Fläche, durch die die Gasströmung im wesentlichen senkrecht hindurch tritt. Dadurch kann die Abscheideeffizienz bei minimiertem Druckverlust verbessert werden. Außerdem wird die Gefahr der Verstopfung oder der Beschädigung durch Verschmutzung verringert. Die besten Ergebnisse ergeben sich dabei insbesondere bei einem Verhältnis von 3:1.

Gemäß einer weiteren vorteilhaften Ausgestaltung der Erfindung wird ein Flüssigkeitsabscheidersystem mit einem Flüssigkeitsabscheider zur Verfügung gestellt, der gemäß einer oder einer Kombination von mehreren der vorstehend genannten Ausgestaltungen der Erfindung aufgebaut ist, und wobei das Flüssigkeitsabscheidersystem zusätzlich ein Flammschutzelement aufweist, das an dem Flansch am oberen Ende des Gehäuses des Flüssigkeitsabscheiders vorgesehen ist, wobei aus dem Flammschutzelement die Gasströmung austreten kann und ein Eindringen von Flammen oder Entzündungsquellen in das Flammschutzelement verhindert wird. Ein Flammschutzelement besteht im Allgemeinen aus einem engmaschigen Metallwerkstoff, wie z.B. einem Gitter oder ähnlichem. Hiermit wird in vorteilhafter Weise die Funktion des Flammschutzelements durch Verhindern des Eintritts der Flüssigkeit aus der Entlüftung auf einfache Weise aufrechterhalten, indem der Flüssigkeitsabscheider in einem Flüssigkeitsabscheidersystem dieser Art vorgesehen wird.

Gemäß einer weiteren vorteilhaften Ausgestaltung der Erfindung wird ein Tanksystem bereitgestellt, das einen Tank aufweist, der eine geschlossene Deckwand und einen Entlüftungs- bzw. Entgasungsanschluss in der Deckwand hat. Dabei ist zumindest ein Flüssigkeitsabscheider, der gemäß einer oder einer Kombination von mehreren der vorstehend genannten Ausgestaltungen der Erfindung aufgebaut ist, oder zumindest ein Flüssigkeitsabscheidersystem, das vorstehend angegeben ist, an dem Entlüftungs- bzw. Entgasungsanschluss angebracht.

Gemäß einer weiteren vorteilhaften Ausgestaltung der Erfindung ist bei dem vorstehend genannten Tanksystem an der Deckwand ein Schwimmkörper vorgesehen, so dass die Deckwand auf der Flüssigkeitsoberfläche gehalten wird. Hier durch ergibt sich die Funktion eines Schwimmdachtanks, auf den die vorliegende Erfindung am wirksamsten anwendbar ist.

Die vorstehend angegebenen Merkmale der Erfindung können in sinnvoller Weise kombiniert werden, so dass sich besonders vorteilhafte Wirkungen ergeben.

Die Erfindung wird am deutlichsten bei Betrachtung der Zeichnungen in Verbindung mit der zugehörigen Beschreibung des Ausführungsbeispiels.
Fig. 1 zeigt eine Längsschnittansicht des Flüssigkeitsabscheiders gemäß einem Ausführungsbeispiel der vorliegenden Erfindung.
Fig. 2 zeigt ein Detail des Flüssigkeitsabscheiders gemäß der vorliegenden Erfindung.
Fig. 3 zeigt eine Längsschnittansicht eines Flüssigkeitsabscheidersystems gemäß der Erfindung.
Fig. 4 zeigt ein Tanksystem mit einem Flüssigkeitsabscheider gemäß der vorliegenden Erfindung.

Ein Ausführungsbeispiel der Erfindung wird unter Bezugnahme auf die Figuren beschrieben.

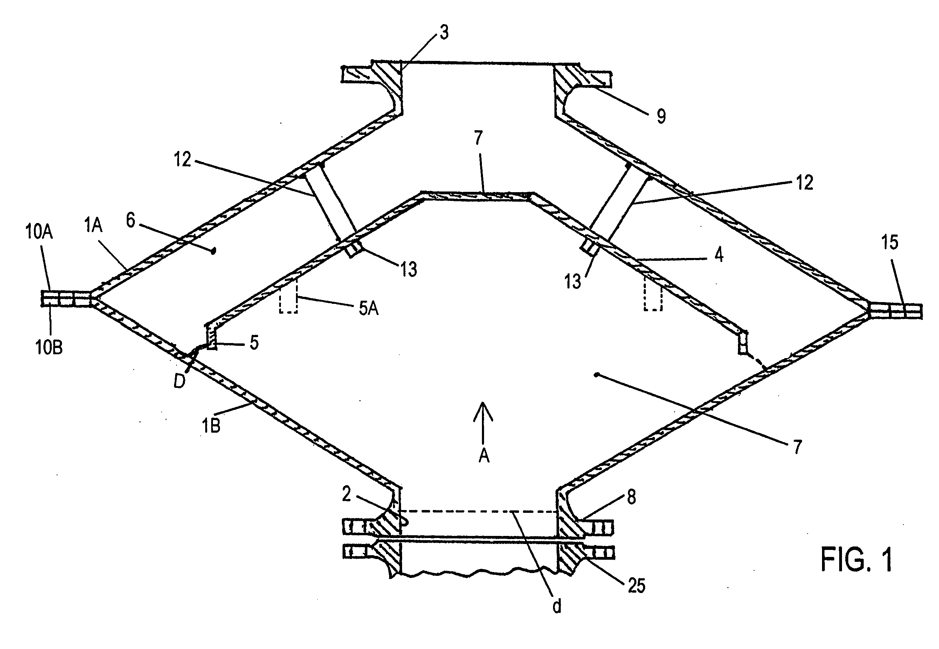

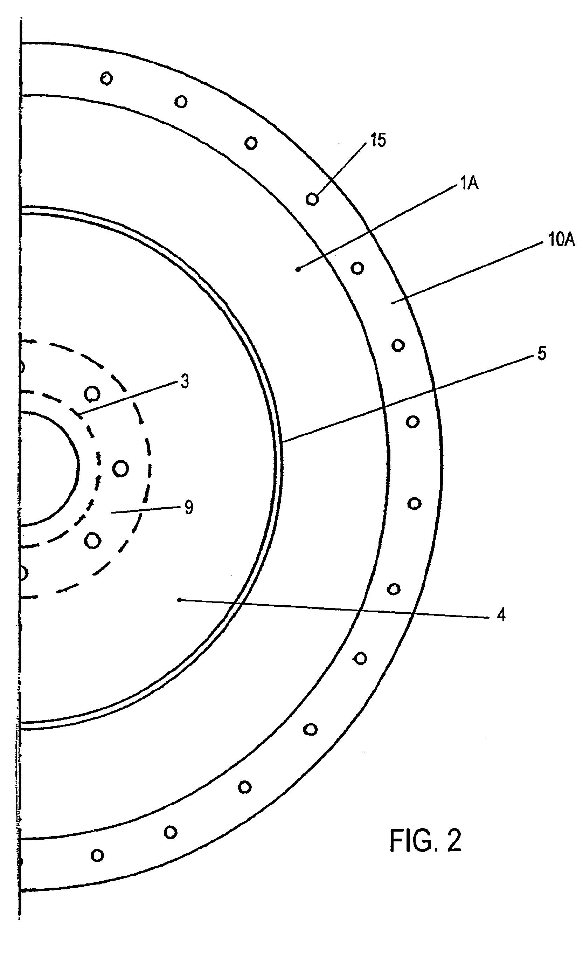

In Fig. 1 ist eine Längsschnittansicht des erfindungsgemäßen Flüssigkeitsabscheiders dargestellt. Fig. 2 zeigt ein Detail des Flüssigkeitsabscheiders von Fig. 1 in einer Ansicht in Richtung des Pfeils A bei entferntem unteren Gehäuseabschnitt.

Der dargestellte Flüssigkeitsabscheider 1 weist einen oberen Gehäuseabschnitt 1A, einen unteren Gehäuseabschnitt 1B und eine Prallplatte 4 als wesentliche Elemente auf. Der obere Gehäuseabschnitt 1A ist mit dem unteren Gehäuseabschnitt 1B jeweils an den großdurchmessrigen Flanschabschnitten 10A, 10B verbunden. Die Flanschabschnitte weisen mehrerer übereinstimmende Bohrungen 15 auf, in die Schrauben 16 zur Verbindung der oberen und unteren Gehäuseabschnitte 1A, 1B eingesetzt werden können.

Im Inneren des Gehäuses des Flüssigkeitsabscheiders ist die Prallplatte 4 vorgesehen. Die Prallplatte ist insgesamt als Konus aufgebaut, dessen Fläche in radialer Fläche nach unten abfällt. Das Gehäuse und die Prallplatte 4 sind aus Blech vorzugsweise aus Stahlblech hergestellt. Die Prallplatte 4 ist an dem oberen Gehäuseabschnitt 1A befestigt. Am oberen Bereich der Prallplatte 4 ist eine Abflachung 7 vorgesehen, um den Raum im Bereich der Austrittsöffnung 3 freizulassen.

An der Innenseite des oberen Gehäuseabschnitts 1A sind zur Befestigung der Prallplatte Bolzen 12 angeschweißt, die in den Innenraum des Gehäuses vorstehen. Die Bolzen 12 weisen Innengewinde auf, in die Schrauben 13 verschraubt werden. Die Schrauben 13 werden durch Bohrungen in der Prallplatte 4 geführt, so dass die Prallplatte an den Bolzen 12 gehalten wird.

Am äußeren Umfang der Prallplatte ist ein Abtropfansatz 5 vorgesehen. Der Abtropfansatz ist einstückig mit der Prallplatte 4 so gestaltet, dass ein ringförmiger Vorsprung nach unten vorstehend ausgerichtet ist. Dieser Abtropfansatz 5 bildet einen Kreisring am äußeren Rand der Prallplatte.

Alternativ kann ein weiter Abtropfansatz 5A vorgesehen werden, der an der nach unten weisenden Fläche der Prallplatte 4 vorsteht und ebenfalls als kreisförmiger Ring ausgestaltet ist.

Das Gehäuse weist eine Eintrittsöffnung 2 und eine Austrittsöffnung 3 auf. An der Eintrittsöffnung ist ein Flansch 8 ausgebildet. Der Flansch 8 ist in diesem Fall ein standardisiertes Bauteil, das mit dem unteren Gehäuseabschnitt 1B dicht verschweißt ist.

An der Austrittsöffnung 3 ist ein Flansch 9 vorgesehen, der identisch mit dem Flansch 8 an der Eintrittsöffnung 2 ist.

Das Innere des Gehäuses wird durch die Prallplatte 4 in zwei Bereiche unterteilt. Unter der Voraussetzung, dass die Symmetrieachse des Flüssigkeitsabscheiders horizontal ausgerichtet ist, gibt es ein oberes Volumen 6 oberhalb der Prallplatte 4 und ein unteres Volumen unterhalb der Prallplatte 4. Die Aufteilung des Gesamtvolumens durch die Prallplatte, die als Verhältnis des oberen Volumens 6 zum unteren Volumen 7 dargestellt werden kann, beträgt ungefähr 1:3.

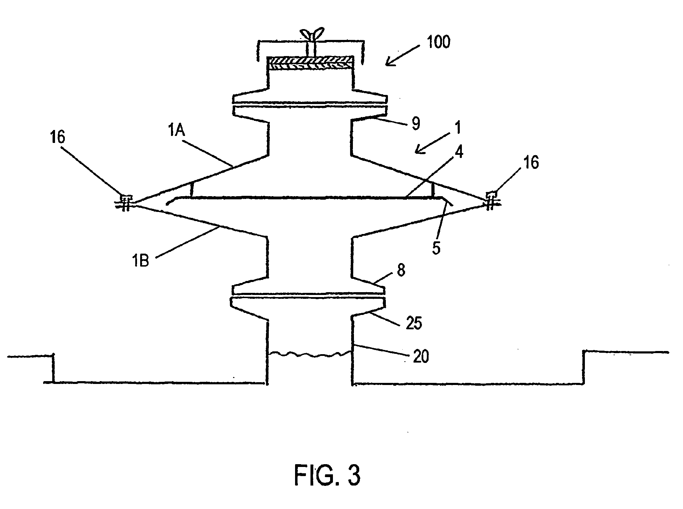

Fig. 3 stellt vereinfacht und schematisch den in Fig. 1 und Fig. 2 dargestellten Flüssigkeitsabscheider dar, der in einem Flüssigkeitsabscheidersystem eingebaut ist. Dieses Flüssigkeitsabscheidersystem weist den in Fig. 1 gezeigten Flüssigkeitsabscheider 1 und einen Flammschutz 100 auf. Der Flammschutz 100 ist an dem Flansch 9 an der Austrittsöffnung des Flüssigkeitsabscheiders montiert. Der Flüssigkeitsabscheider 1 ist mit dem Flansch 8 an der Eintrittsöffnung 2 mit einem Austrittsflansch 25 eines Behälters verbunden.

Die Funktion des Flüssigkeitsabscheiders 1, der in dem in Fig. 3 gezeigten Flüssigkeitsabscheidersystem eingebaut ist, wird im Folgenden erklärt. Ein Anschluss 20, der in Fig. 3 gezeigt ist, befindet sich in der Nähe der Flüssigkeitsoberfläche der Flüssigkeit, die in einem Tank gelagert wird. Beim Aufsteigen von Gasblasen bzw. Luftblasen innerhalb des Tanks treten diese durch den Anschluss 20 aus, der als Entlüftungsöffnung dient. Diese Gasblasen bilden die Gasströmung, die durch den Flüssigkeitsabscheider tritt. Diese Gasströmung kann aufgrund der hohen Geschwindigkeit im Anschluss 20 Flüssigkeit mitreißen. Diese Flüssigkeit prallt aufgrund der Trägheit gegen die untere Fläche der Prallplatte 4. Aufgrund der Schwerkraft fließt die Flüssigkeit an der Unterseite der Prallplatte nach unten und tropft am Abtropfansatz 5 (bzw. 5A) nach unten auf die Innenseite des unteren Gehäuseabschnitts 1A ab. Von hier läuft die Flüssigkeit zurück in den Anschluss 20 und somit in den Tank.

Die Gasströmung tritt durch den Spalt zwischen dem Abtropfansatz 5 und der Innenseite des unteren Gehäuseabschnitts 1B. Von dort tritt die Gasströmung durch das obere Volumen 6 zur Austrittsöffnung 3 des Flüssigkeitsabscheiders.

Die von der Flüssigkeit befreite Gasströmung tritt dann durch den Flammschutz 100 in die Atmosphäre.

Erfindungsgemäß wird daher die Gasströmung von mitgerissenen Flüssigkeitstropfen befreit, so dass der Flammschutz 100 nicht durch verschmutzt wird. Auch wird verhindert, dass aufgrund von aussteigenden Gasblasen mitgerissene Flüssigkeit nach außen tritt. Hierdurch kann die Sicherheit des Systems verbessert werden und kann die Verschmutzung von Elementen des Tanks verhindert werden.

Um den Druckverlust der Gasströmung beim Durchtritt durch den Flüssigkeitsabscheider zu minimieren und gleichzeitig die Abscheideeffizienz hoch zu halten, ist eine große Durchgangsfläche D zwischen dem äußeren Umfang der Prallplatte 4 und der inneren Fläche des Gehäuses 1 vorgesehen. Ein besonders gutes Strömungsverhalten ergibt sich dann, wenn diese Durchgangsfläche D dreimal so groß gewählt wird wie die Durchgangsfläche d an der Eintrittsöffnung 2.

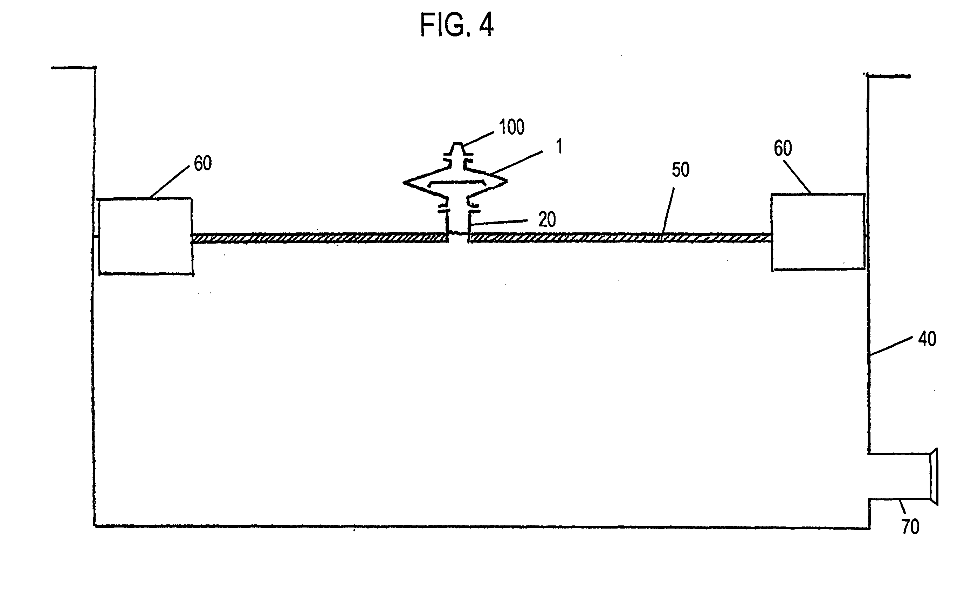

Die in Fig. 1 gezeigte Konstruktion des Flüssigkeitsabscheiders ist besonders wirkungsvoll in Anwendung auf einem Schwimmdachtank, der in Fig. 4 dargestellt ist. Ein Schwimmdachtank besteht aus einem Tankhauptkörper 40 zur Aufnahme der Flüssigkeit, wie z.B. von zu lagerndem Öl. Auf der Flüssigkeitsoberfläche schwimmt ein sogenanntes Schwimmdach, das aus einer Deckwand 50 und einem daran angebrachten Schwimmkörper 60 besteht. Aufgrund dieser Konfiguration schwimmt der Schwimmkörper 60 mit der daran angebrachten Deckwand 50 auf der Oberfläche der zu lagernden Flüssigkeit. An der Deckwand 50 ist zumindest ein Anschluss 20 vorgesehen, an dem üblicherweise direkt ein Flammschutz 100 angebracht werden kann. Erfindungsgemäß ist an dem Anschluss ein Flüssigkeitsabscheider angebracht, an dessen Ausgang wiederum der Flammschutz 100 montiert wird.

Beim Einleiten von Flüssigkeit an dem Anschluss 70 in den Schwimmdachtank ergibt sich eine Ausgasung der eingeleiteten Flüssigkeit aufgrund von Druckdifferenzen in der Flüssigkeit, die sich aufgrund von Höhendifferenzen ergeben. Zusätzlich können in der eingeleiteten Flüssigkeit bereits ausgebildete Gasblasen befinden, die in den Tank eingeleitet werden. Die Gasblasen steigen nach oben und treten aus dem Tanksystem durch den Anschluss 20 aus. Dabei ergibt sich eine schwallartige Bewegung von mehr oder weniger großen Gasblasen, die in den relativ engen Anschluss 20 eintreten. Dabei mitgerissene Öltropfen oder größere Mengen des Öls werden an der Prallplatte 4 des Flüssigkeitsabscheiders abgeschieden und durch die spezielle Konstruktion des Gehäuses zurückgeführt.

Aufgrund der einfachen Konstruktion mit identischen und standardisierten Flanschanschlüssen 8 und 9 an der Eintrittsseite und der Austrittsseite des Gehäuses des Flüssigkeitsabscheiders kann der erfindungsgemäße Flüssigkeitsabscheider bei vorhandenen Systemen derart ergänzt werden, dass der vorhandene Flammschutz 100 demontiert wird und der Flüssigkeitsabscheider auf den Anschluss 20 montiert wird. Der Flammschutz 100 wird dann wiederum an den Flansch 9 der Austrittsöffnung 3 des Flüssigkeitsabscheiders montiert.

Aufgrund des besonderen Verhaltens der aufsteigenden Gasblasen bei einem Schwimmdachtank bietet die Aufteilung des oberen Volumens 6 zum unteren Volumen 7 insbesondere mit dem Verhältnis von 1:3 besondere Vorteile. Hierdurch wird die Abscheideeffizienz maximiert, während der Druckverlust in der Gasströmung minimiert wird. Ein erhöhter Druckverlust würde eine Beschädigung des Flüssigkeitsabscheiders bei besonders großen Gasströmungen zur Folge haben. Gleichzeitig würde die Verkleinerung der Prallplatte 4, um eine Verringerung des Druckverlusts zu erzielen, eine Verringerung der Abscheideeffizienz bedeuten.

Der besondere Aufbau mit zwei konischen Gehäusehälften und einer konischen nach unten ausgerichteten Prallplatte stellen einen Flüssigkeitsabscheider mit maximierter Abscheideeffizienz und minimiertem Druckverlust zur Verfügung. Besonders vorteilhaft wirkt sich bei einem solchen Aufbau das vorstehend angegebene spezielle Verhältnis des oberen Volumens 6 zum unteren Volumen 7 aus.

Aus Sicherheitsgründen kann die Innenseite des Gehäuses und die Oberfläche der Prallplatte mit einer elektrisch leitfähigen Beschichtung versehen werden. Das Gesamtsystem kann dann geerdet werden, so dass keine Funkenentladung auftreten kann. So kann die Sicherheit des Systems weitergehend verbessert werden.

Die Erfindung ist nicht auf das vorstehend beschriebene Ausführungsbeispiel beschränkt. Verschiedene Abwandlungen können vorgenommen werden, solange das Grundprinzip der Erfindung ermöglicht wird. Insbesondere müssen die Flansche 8 und 9 nicht identisch sein. Ferner muss der Abtropfansatz 5 oder 5A nicht durchgehend als Kreisring ausgeführt werden. Einzelne Ansätze können an der Prallplatte 4 vorgesehen werden, die ein definiertes Abtropfen der Flüssigkeit ermöglichen. Die Prallplatte 4 muss nicht an den Bolzen 12 verschraubt werden. Vielmehr kann die Prallplatte 4 vollständig an dem Bolzen 12 verschweißt werden. Jedoch ist es vorzuziehen, die Prallplatte 4 lösbar mit dem Gehäuse zu verbinden, um eine Wartung des Systems zu ermöglichen. Die Flansche 8, 9 des Gehäuses können auch miteinander verschweißt werden. Jedoch ist es vorzuziehen, eine lösbare Schraubverbindung vorzusehen, um die Montage zu vereinfachen und eine nachträgliche Wartung des Systems zu ermöglichen.

Der Flüssigkeitsabscheider ist bei allen Systemen einsetzbar, bei denen eine Gasströmung Flüssigkeitsbestandteile enthalten kann, die aus dieser Gasströmung zu entfernen sind. Insbesondere kann der Flüssigkeitsabscheider ohne den in den Figuren 3 oder 4 gezeigten Flammschutz verwendet werden.

## Patentansprüche

1. Flüssigkeitsabscheider zur Abscheidung von durch eine schwallartige Gasströmung mitgerissener Flüssigkeit mit einem Gehäuse (1), das bezogen auf eine Ausrichtung im Betriebszustand eine Eintrittsöffnung (2) an einem unteren Gehäuseabschnitt (1B) und eine Austrittsöffnung (3) an einem oberen Gehäuseabschnitt (1A) hat, wobei in dem Gehäuse (1) zwischen der Eintrittsöffnung (2) und der Austrittsöffnung (3) eine Prallplatte (4) vorgesehen ist, die verhindert, dass die von der Gasströmung mitgerissene Flüssigkeit aus der Austrittsöffnung (3) austritt, indem die mitgerissene Flüssigkeit an die Prallplatte (4) prallt und aufgrund der Schwerkraft in die Eintrittsöffnung (2) zurückgeführt wird, wobei
das Gehäuse (1) und die Prallplatte (4) rotationssymmetrisch sind und die Symmetrieachse im Betrieb des Flüssigkeitsabscheiders im Wesentlichen senkrecht ausgerichtet ist, wobei das Gehäuse (1) aus dem oberen Gehäuseabschnitt (1A) und dem unteren Gehäuseabschnitt (1B) ausgebildet ist,
**dadurch gekennzeichnet, dass**
die Prallplatte (4) am Gehäuse so befestigt ist, dass sie von der Innenwand des Gehäuses (1) beabstandet ist, wobei zwischen der Innenwand des Gehäuses (1) und dem Umfang der Prallplatte (4) ein ringförmiger Spalt gebildet wird, durch den im Betrieb des Flüssigkeitsabscheiders die Gasströmung tritt,
wobei die Gehäuseabschnitte (1A, 1B) jeweils aus konusförmigen Elementen bestehen und einen Abschnitt mit großem Durchmesser und einen Abschnitt mit kleinem Durchmesser aufweisen, wobei das Gehäuse (1) durch Verbinden der Abschnitte mit großem Durchmesser des oberen Gehäuseabschnitts (1A) und des unteren Gehäuseabschnitts (1B) gebildet wird und wobei die Eintrittsöffnung (2) und die Austrittsöffnung (3) am Abschnitt mit kleinem Durchmesser des unteren bzw. oberen Gehäuseabschnitts (1A, 1B) ausgebildet ist, und
wobei die Prallplatte (4) die Form eines Konus hat, der zum äußeren Durchmesser in Betriebsposition des Flüssigkeitsabscheiders nach unten abfällt.

2. Flüssigkeitsabscheider gemäß Anspruch 1, wobei die Prallplatte (4) und/oder die Gehäuseabschnitte (1A, 1B) aus einem dünnwandigen Material, insbesondere aus Blech bestehen.

3. Flüssigkeitsabscheider gemäß Anspruch 1 oder 2, wobei die Prallplatte (4) an dem oberen und/oder dem unteren Gehäuseabschnitt (1A; 1B) befestigt ist und einen Abtropfansatz (5; 5A) aufweist, der am unteren Ende der Prallplatte (4) vorgesehen ist.

4. Flüssigkeitsabscheider gemäß Anspruch 3, wobei der Abtropfansatz (5) kreisförmig am Rand der Prallplatte (4) ausgebildet ist und im Wesentlichen nach unten ausgerichtet ist.

5. Flüssigkeitsabscheider gemäß Anspruch 1, wobei die Prallplatte (4) den Innenraum des Gehäuses (1) in ein oberes Volumen (6) oberhalb der Prallplatte (4) und ein unteres Volumen (7) unterhalb der Prallplatte (4) unterteilt, wobei das Verhältnis des oberen Volumens (6) zum unteren Volumen (7) ungefähr 1:3 beträgt, und/oder das Verhältnis einer Durchgangsfläche (D) zwischen der Prallplatte (4) und der Innenwand des Gehäuses (1) und einer Durchgangsfläche (d) in der Eintrittsöffnung (2) mindestens 3:1 beträgt.

6. Flüssigkeitsabscheider gemäß einem der vorhergehenden Ansprüche, wobei am unteren Ende des Gehäuses (1) ein Flansch (8) vorgesehen ist und am oberen Ende des Gehäuses (1) ein Flansch (9) vorgesehen ist, wobei die Anschlussmaße der Flansche (8, 9) identisch sind.

7. Flüssigkeitsabscheider gemäß einem Ansprüche 3-6, wobei der Flüssigkeitsabscheider konfiguriert ist, um eine Flüssigkeit enthaltende von der Eintrittsöffnung (2) zur Austrittsöffnung (3) verlaufende Gasströmung von der Flüssigkeit zu befreien, indem die Flüssigkeit an der Prallplatte (4) abgeschieden und über den Abtropfansatz (5; 5A) zurück zur Eintrittsöffnung (2) geführt wird.

8. Flüssigkeitsabscheidersystem mit einem Flüssigkeitsabscheider gemäß einem der Ansprüche 1-7 und einem Flammschutzelement (100), das an einem Flansch (9) am oberen Ende des Gehäuses (1) vorgesehen ist, wobei die Gasströmung aus dem Flammschutzelement (100) austreten kann und ein Eindringen von Flammen oder Entzündungsquellen in das Flammschutzelement (100) verhindert wird.

9. Tanksystem mit einem Tank, der eine geschlossene Deckwand (50) und einen Entlüftungs- bzw. Entgasungsanschluss (20) in der Deckwand (50) hat, wobei zumindest ein Flüssigkeitsabscheider gemäß einem der Ansprüche 1-7 oder zumindest ein Flüssigkeitsabscheidersystem gemäß Anspruch 8 an dem Entlüftungs- bzw. Entgasungsanschluss (20) angebracht ist.

10. Tanksystem gemäß Anspruch 9, wobei die Deckwand (50) ferner einen Schwimmkörper (60) aufweist, so dass die Deckwand (50) auf der Flüssigkeitsoberfläche gehalten wird.

## Claims

1. A liquid separator for separating a liquid entrained by a gush-like gas flow, comprising a housing (1) which, with regard to an alignment in an operating state, has an inlet opening (2) at a lower housing portion (1B) and an outlet opening (3) at an upper housing portion (1A), wherein a deflecting plate (4) is provided in the housing (1) between the inlet opening (2) and the outlet opening (3), the deflecting plate preventing the liquid entrained by the gas flow from exiting through the outlet opening (3) in that the entrained liquid deflects onto the deflecting plate (4) and is returned into the inlet opening (2) due to gravity, wherein
the housing (1) and the deflecting plate (4) are rotationally symmetric and the axis of symmetry is aligned substantially vertically during operation of the liquid separator, wherein the housing (1) is formed by the upper housing portion (1A) and the lower housing portion (1B),
**characterized in that**
the deflecting plate (4) is fixed to the housing such that it is spaced apart from the inner wall of the housing (1), wherein, between the inner wall of the housing (1) and the circumference of the deflecting plate (4), an annular gap is formed through which the gas flow passes during operation of the liquid separator,
wherein the housing portions (1A, 1B) respectively consist of conical elements and comprise a large diameter portion and a small diameter portion, wherein the housing (1) is formed by connecting the large diameter portions of the upper housing portion (1A) and of the lower housing portion (1B), and wherein the inlet opening (2) and the outlet opening (3) are formed at the small diameter portion of the lower and upper housing portion (1A, 1B), respectively, and
wherein the deflecting plate (4) has the shape of a cone that is downwards inclined towards the outer diameter in an operating position of the liquid separator.

2. The liquid separator according to claim 1, wherein the deflecting plate (4) and/or the housing portions (1A, 1B) consist of a thin-walled material, in particular metal sheet.

3. The liquid separator according to claim 1 or 2, wherein the deflecting plate (4) is fixed to the upper and/or lower housing portion (1A; 1B) and comprises a draining extension (5; 5A) provided at the lower end of the deflecting plate (4).

4. The liquid separator according to claim 3, wherein the drip lip (5) is circularly formed at the edge of the deflecting plate (4) and is aligned substantially downwards.

5. The liquid separator according to claim 1, wherein the deflecting plate (4) divides the inner space of the housing (1) into an upper volume (6) above the deflecting plate (4) and a lower volume (7) below the deflecting plate (4), wherein the ratio of the upper volume (6) to the lower volume (7) is approximately 1:3, and/or the ratio of a passage area (D) between the deflecting plate (4) and the inner wall of the housing (1) to a passage area (d) in the inlet opening (2) is at least 3:1.

6. The liquid separator according to any of the preceding claims, wherein a flange (8) is provided at the lower end of the housing (1) and a flange (9) is provided at the upper end of the housing (1), wherein the connection dimensions of the flanges (8, 9) are identical.

7. The liquid separator according to any of claims 3-6, wherein the liquid separator is configured to remove the liquid from a liquid-containing gas flow, which extends from the inlet opening (2) to the outlet opening (3), by separating the liquid at the deflecting plate (4) and returning it to the inlet opening (2) via the draining extension (5; 5A).

8. A liquid separator system comprising a liquid separator according to any of claims 1-7, and a flame protection element (100) provided at a flange (9) at the upper end of the housing (1), wherein the gas flow can exit from the flame protection element (100) and an intrusion of flames or ignition sources into the flame protection element (100) is prevented.

9. A tank system comprising a tank having a closed ceiling wall (50) and a ventilation or degassing port (20) in the ceiling wall (50), wherein at least a liquid separator according to any of claims 1-7 or at least a liquid separator system according to claim 8 is attached to the ventilation or degassing port (20).

10. The tank system according to claim 9, wherein the ceiling wall (50) further comprises a floating body (60) such that the ceiling wall (50) is held on the liquid surface.

## Revendications

1. Séparateur de liquide destiné à séparer un liquide entraîné par un flux gazeux en forme de vague, comportant un carter (1) présentant une ouverture d'admission (2) sur une partie inférieure de carter (1B) et une ouverture de sortie (3) sur une partie supérieure de carter (1A) par rapport à une orientation en état de service, une chicane (4) étant prévue dans le carter (1) entre l'ouverture d'admission (2) et l'ouverture de sortie (3), ladite chicane empêchant un échappement par l'ouverture de sortie (3) du liquide contenu dans le flux gazeux, le liquide entraîné heurtant la chicane (4) et étant reconduit vers l'ouverture d'admission (2) sous l'effet de la force de gravité,
le carter (1) et la chicane (4) étant symétriques par rapport à un axe l'un par rapport à l'autre, et l'axe de symétrie étant sensiblement orienté verticalement en état de service du séparateur de liquide, le carter (1) étant formé par la partie supérieure de carter (1A) et par la partie inférieure de carter (1B),
**caractérisé**
**en ce que** la chicane (4) est fixée contre le carter de manière à être espacée de la paroi intérieure du carter (1), une fente annulaire étant formée entre la paroi intérieure du carter (1) et la périphérie de la chicane (4), par laquelle le flux gazeux s'écoule en service du séparateur de liquide,
les parties de carter (1A, 1B) étant constituées chacune d'un élément en forme de cône, et présentant une section de grand diamètre et une section de petit diamètre, le carter (1) étant formé par assemblage des sections de grand diamètre de la partie supérieure de carter (1A) et de la partie inférieure de carter (1B), et l'ouverture d'admission (2) et l'ouverture de sortie (3) étant formées sur les sections de petit diamètre de la partie inférieure et de la partie supérieure de carter (1A, 1B), et
la chicane (4) ayant la forme d'un cône à surface s'évasant vers le diamètre extérieur en position de service du séparateur de liquide.

2. Séparateur de liquide selon la revendication 1, où la chicane (4) et/ou les parties de carter (1A, 1B) sont constituées d'un matériau à paroi mince, en particulier de la tôle.

3. Séparateur de liquide selon la revendication 1 ou la revendication 2, où la chicane (4) est fixée sur la partie supérieure et/ou la partie inférieure de carter (1A ; 1B) et comporte un épaulement d'égouttage (5 ; 5A) prévu à l'extrémité inférieure de la chicane (4).

4. Séparateur de liquide selon la revendication 3, où l'épaulement d'égouttage (5) est prévu avec une forme circulaire sur le bord de la chicane (4) et est sensiblement dirigé vers le bas.

5. Séparateur de liquide selon la revendication 1, où la chicane (4) divise l'intérieur du carter (1) en un volume supérieur (6) au-dessus de la chicane (4) et un volume inférieur (7) en dessous de la chicane (4), le rapport entre le volume supérieur (6) et le volume inférieur (7) étant sensiblement égal à 1:3, et/ou le rapport entre une surface de passage (D) entre la chicane (4) et la paroi intérieure du carter (1) et une surface de passage (d) dans l'ouverture d'admission (2) est égal ou supérieur à 3:1.

6. Séparateur de liquide selon l'une des revendications précédentes, où une bride (8) est prévue à l'extrémité inférieure du carter (1), et une bride (9) à l'extrémité supérieure du carter (1), les cotes de connexions des brides (8, 9) étant égales.

7. Séparateur de liquide selon l'une des revendications 3 à 6, où ledit séparateur de liquide est prévu pour débarrasser d'un liquide un flux gazeux contenant ledit liquide et s'écoulant de l'ouverture d'admission (2) à l'ouverture de sortie (3), le liquide étant séparé sur la chicane (4) et reconduit par l'épaulement d'égouttage (5 ; 5A) vers l'ouverture d'admission (2).

8. Système de séparateur de liquide comportant un séparateur de liquide selon l'une des revendications 1 à 7 et un élément pare-flamme (100) prévu contre la bride (9) à l'extrémité supérieure du carter (1), où le flux gazeux peut sortir de l'élément pare-flamme (100) et où la pénétration de flammes ou de sources d'inflammation dans l'élément pare-flamme (100) est empêchée.

9. Système de réservoir avec un réservoir comportant une paroi de couvercle (50) fermée et un raccord de purge d'air ou de dégazage (20) dans la paroi de couvercle (50), où au moins un séparateur de liquide selon l'une des revendications 1 à 7 ou au moins un système de séparateur de liquide selon la revendication 8 est disposé sur le raccord de purge d'air ou de dégazage (20).

10. Système de réservoir selon la revendication 9, où la paroi de couvercle (50) comprend en outre un corps flotteur (60), de manière à maintenir la paroi de couvercle (50) contre la surface du liquide.
